# EUROPÄISCHE PATENTANMELDUNG

(11) **EP 1 176 046 A2**
(43) Veröffentlichungstag der Anmeldung: **30.01.2002**
(21) Anmeldenummer: 01117428.1
(22) Anmeldetag: 19.07.2001
(51) Int. Cl.: B60L 11/18, H01M 8/06

(54) **Verfahren zum Betreiben eines Gaserzeugungssystems in einem Brennstoffzellen enthaltenden Kraftfahrzeug**

(30) Priorität: 26.07.2000 DE 10036267
(71) Anmelder: XCELLSIS GmbH, 73230 Kirchheim/Teck-Nabern (DE)
(72) Erfinder: Boneberg, Stefan, 72660 Beuren (DE); Freitag, Oliver, 70180 Stuttgart (DE); Keppeler, Berthold, Dr., 73277 Owen (DE)
(74) Vertreter: Kocher, Klaus-Peter Dipl.-Phys

(57) **Zusammenfassung**

Ein Verfahren dient zum Betreiben eines Gaserzeugungssystems in einem Kraftfahrzeug. In dem Gaserzeugungssystem wird aus einem, insbesondere flüssigen, Ausgangsstoff, welcher zumindest einen Anteil an flüssigem Kohlenwasserstoff als Kraftstoff enthält, ein wasserstoffhaltiges Gas erzeugt. Das wasserstoffhaltige Gas dient zum Betrieb einer Brennstoffzelle, welche die Bordstromversorgung des Kraftfahrzeuges sicherstellt.

## Beschreibung

Die Erfindung betrifft ein Verfahren zum Betreiben eines Gaserzeugungssystems in einem Kraftfahrzeug nach der im Oberbegriff von Anspruch 1 näher definierten Art.

Aus der US 4,820,594 ist ein Startverfahren für ein Gaserzeugungssystem in einer Brennstoffzellenanlage bekannt. Durch den in der Anlage verwendeten Brennstoff wird in der Startphase des Gaserzeugungssystems die für das Gaserzeugungssystem erforderliche thermische Energie durch eine direkte Verbrennung dieses Brennstoffs im Bereich von zumindest einzelner Komponenten des Gaserzeugungssystems erreicht. Dabei wird der in der Brennstoffzellenanlage ohnehin vorliegende Brennstoff, welcher durch das Gaserzeugungssystem in dem weiteren Betrieb der Anlage in das wasserstoffhaltige Gas für die Brennstoffzelle reformiert wird, für diese Verbrennung zum schnellen Aufheizen des Gaserzeugungssystems genutzt.

Es ergeben sich hier zwar Vorteile, da lediglich ein einziger Brennstoff in der Anlage bevorratet werden muß, andererseits ist die entsprechende Anwendung des Brennstoffzellenanlage dadurch eingeschränkt, da im allgemeinen ein leicht zu reformierender, bezüglich seiner Energiedichte relativ ungünstiger Kraftstoff für die Verbrennung verwendet werden muß, und da eine entsprechende Bevorratung von Wasser für die Reformierung des Brennstoffs erfolgen muß.

Die US 5,110,559 zeigt ebenfalls ein Gaserzeugungssystem, welches zur Erzeugung eines wasserstoffhaltigen Gases zum Betrieb einer Brennstoffzelle geeignet ist. Die während des Betriebs des Gaserzeugungssystems für die Reformierung des Ausgangsstoffes benötigte thermische Energie wird dem Reformierungsreaktor dabei mittels einer Verbrennung des erzeugten Gases zugeführt.

Diese Vorgehensweise weist Nachteile im Bereich der Startphase auf, da hier noch keine ausreichende Menge an wasserstoffhaltigem Gas zur Verfügung steht, um die Befeuerung des Reformers zur Erzeugung der erforderlichen thermischen Energie zu gewährleisten.

Außerdem ist es von Gaserzeugungssystemen für Brennstoffzellenanlagen, welche mit Methanol als Ausgangsstoffe für die Erzeugung des wasserstoffhaltigen Gases betrieben werden, bekannt, daß in der Startphase des Gaserzeugungssystems das Methanol auf Katalysatoren umgesetzt wird, da das gesamte Gaserzeugungssystem noch nicht auf der für seinen Betrieb erforderlichen Temperatur ist. Jedoch ist auch diese Umsetzung des Methanols auf den entsprechenden Katalysatoren schwierig, da bei den überwiegend vorliegenden vergleichsweise tiefen Temperaturen die Aktivität des Katalysators selbst noch sehr gering ist. Außerdem muß das Methanol verdampft werden, um eine möglichst gute Verteilung und einen wenigstens annähernd vollständigen Umsatz auf den entsprechenden Katalysatoren zu erreichen.

Die DE 197 55 814 C1 zeigt im Zusammenhang mit dieser Thematik ein Verfahren, bei dem während des Kaltstarts der Anlage wenigstens ein Teil des Reformierungsreaktors als Mehrfunktions-Reaktoreinheit in einer ersten Betriebsphase als katalytische Brennereinheit unter Zufuhr eines Brennstoffs und eines sauerstoffhaltigen Gases betrieben wird. In einer anschließenden zweiten Betriebsphase wird der wenigstens eine Teil des Reformierungsreaktors als Einheit zur partiellen Oxidation des Kohlenwasserstoffs sowie anschließend, bei warmgelaufener Anlage, wenigstens zeitweise als Reformereinheit zur Wasserdampfreformierung des Kohlenwasserstoffs betrieben.

Mit diesem Verfahren ist man in der Lage, die Starteigenschaften eines derartigen Gaserzeugungssystems zu verbessern. Es gelten hier allerdings vergleichbare Nachteile wie bei den oben genannten Schriften, da die Anlage auch hier mit dem entsprechenden Kohlenwasserstoff, beispielsweise Methanol, betrieben wird, und da dieser für die Umsetzung in der ersten Startphase der Anlage in einer möglichst reinen Form vorliegen muß, also beispielsweise nicht als Premix getankt werden kann.

Es ist daher Aufgabe der Erfindung, ein Verfahren zum Betreiben eines Gaserzeugungssystems, welches aus einem flüssigen Ausgangsstoff, welcher zumindest einen Anteil an flüssigem Kohlenwasserstoff enthält, ein wasserstoffhaltiges Gas zum Betrieb einer Brennstoffzelle erzeugt, zu schaffen, welches einen bezüglich seiner Versorgung mit thermischer Energie möglichst idealen Betrieb des Gaserzeugungssystems während aller Betriebsphasen ermöglicht.

Erfindungsgemäß wird diese Aufgabe durch die im kennzeichnenden Teil von Anspruch 1 genannten Merkmale gelöst.

Durch den Einsatz eines entsprechenden zusätzlichen Kraftstoffs, wie beispielsweise Erdgas, Naphta, Dimethyläther, Benzin, Diesel, Flüssiggas oder dergleichen, ergeben sich entscheidende Vorteile, insbesondere auch während der Startphase des Gaserzeugungssystems.

Die entsprechenden verwendbaren Kraftstoffe können beispielsweise eine leichtere Verdampfbarkeit aufweisen und erlauben damit eine einfachere Verteilung des Kraftstoffes. Desweiteren kann die Aktivierungsenergie zur Umsetzung des Kraftstoffes am Katalysator deutlich herabgesetzt sein. Dies wiederum vereinfacht und beschleunigt den Kaltstart vor allem bei tiefen Temperaturen. Außerdem können derartige Kraftstoffe über eine entsprechende thermische oder katalytische Konvertierung annähernd rückstandsfrei umgesetzt werden. Dadurch und auch aufgrund der schnellen Aufheizung ist das Gaserzeugungssystem mit einer entsprechend niedrigen Startemission zu betreiben.

Außerdem kann der eingesetzte Kraftstoff beispielsweise einen weitaus höheren Heizwert als der für die Reformierung in dem Gaserzeugungssystem ansonsten genutzte Kraftstoff aufweisen, wodurch die Versorgung von einzelnen Komponenten des Gaserzeugungssystems mit thermischer Energie, wie beispielsweise Reformer, Verdampfer, Shiftstufen oder dergleichen, verbessert werden kann.

Ein weiterer Vorteil liegt darin, daß der zusätzliche Kraftstoff eine weitaus höhere Energiedichte aufweisen kann, als der für den Betrieb des Gaserzeugungssystems vorgesehene Kraftstoff, beispielsweise Methanol. Durch diese sehr hohe Energiedichte ergeben sich erhebliche Vorteile bezüglich des für die Speicherung des zusätzlichen Kraftstoffes erforderlichen Raumes. Dies zeigt sich in der zusätzlich erforderlichen Leitungslänge und des erforderlichen Tanks für den zusätzlichen Kraftstoff, Bauraum- und Packagingvorteile, da der zusätzliche Kraftstoff, welcher zur Erzeugung der erforderlichen thermischen Energie genutzt wird, ein weitaus geringeres Speichervolumen benötigt, als es eine zur Bereitstellung derselben thermischen Energie erforderlichen Menge an zu reformierendem Kraftstoff, beispielsweise an Methanol, benötigen würde.

Ein weiterer Vorteil liegt darin, daß mit dem erfindungsgemäßen Verfahren der Betrieb des Gaserzeugungssystems mit einem vorgefertigten Gemisch aus Wasser und flüssigem Kohlenwasserstoff, einem sogenannten Premix, möglich ist. Insbesondere bei kleineren Einheiten aus Gaserzeugungssystem und Brennstoffzelle, welche in einer besonders günstigen Weiterbildung der Erfindung als Nebenstromversorgung zusätzlich zu einem Antriebsaggregat des Kraftfahrzeugs genutzt werden können, ergeben sich dadurch erhebliche Vorteile.

Diese Nebenstromversorgungen, welche auch als "auxiliary power unit" APU bezeichnet werden, können dann einen sehr einfachen Aufbau aufweisen, da die Ausgangsstoffe Wasser und Methanol für die Gaserzeugung bereits in ihrem benötigten Volumenverhältnis vorliegen und sich eine Umsetzung dieses Premix mit weitaus weniger Aufwand an Komponenten, z.B. Pumpen, und mit weitaus einfacheren Komponenten, beispielsweise eingängige Verdampfer anstatt eines zweigängigen Verdampfers für eine Getrenntverdampfung von Wasser und Methanol, realisieren läßt.

Weitere Vorteile ergeben sich bei dieser günstigen Ausführungsform der Erfindung dadurch, daß als erfindungsgemäßer Kraftstoff beispielsweise der zusätzliche Kraftstoff verwendet werden kann, der auch für das Antriebsaggregat genutzt wird. Dieses Antriebsaggregat kann dabei z.B. ein Verbrennungsmotor sein, welcher über einen flüssigen Kohlenwasserstoff, wie beispielsweise Benzin oder Diesel, betrieben wird. Dieser dann in dem Kraftfahrzeug ohnehin vorhandene Kraftstoff kann so gemäß dem erfindungsgemäßen Verfahren als zusätzlicher Kraftstoff genutzt werden, wodurch weitere Einsparungen an Bauraum, Speichereinheiten und dergleichen erzielt werden können.

Als besonderer Anwendungsfall für einen Aufbau, welcher mit dem erfindungsgemäßen Verfahren zum Betreiben einer derartigen APU genutzt wird, läßt sich beispielsweise an Nutzfahrzeuge denken. Eine Stromversorgung wird hier auch bei einem Stillstand des Antriebsaggregats, beispielsweise während der Pausenzeiten oder an Wochenenden, an welchen die Fahrer der Nutzfahrzeuge in dem Nutzfahrzeug anwesend sind und elektrische Energie zum Betrieb von Klimaanlagen, Unterhaltungselektronik und dergleichen benötigen, gewünscht. Darüber hinaus spielt auch der Einsatz bei einer Standklimatisierung oder bei Nutzfahrzeugen mit einer Klimatisierungsanlage, z.B. zur Kühlung von verderblicher Ladung, eine Rolle.

Ein weiterer sehr günstiger Anwendungsfall kann beim Einsatz in Wohnmobilen oder dergleichen gesehen werden. Derartige Fahrzeuge führen neben dem Kraftstoff für das Antriebsaggregat des Fahrzeugs oft zusätzlich einen weiteren Kohlenwasserstoff, meist ein Flüssiggas zum Kochen, Heizen und gegebenenfalls Kühlen mit sich. In diesem Fall könnte in besonders günstiger Weise dieses Flüssiggas als weiterer Kraftstoff für das erfindungsgemäße Verfahren zum Betreiben der APU genutzt werden, da sich hier die Versorgung und Regelung des Zuflusses an weiterem Kraftstoff in das Gaserzeugungssystem sehr einfach ausführen läßt.

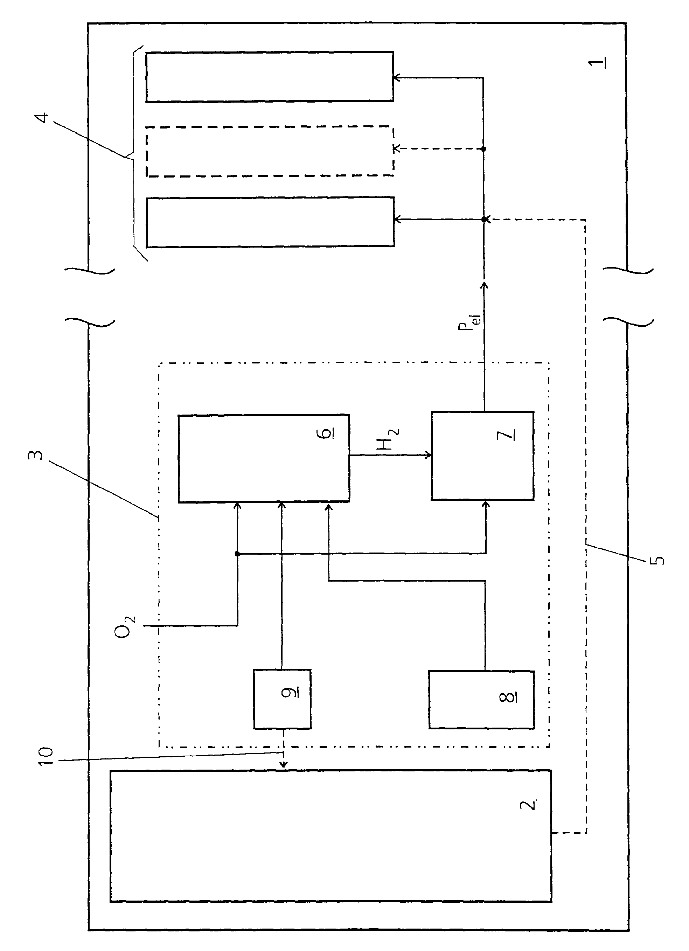

Weitere vorteilhafte Ausgestaltungen der Erfindung ergeben sich aus den restlichen Unteransprüchen und aus dem anhand der Zeichnung nachfolgend prinzipmäßig dargestellten Ausführungsbeispiel.

Die einzige beigefügte Figur zeigt ein stark schematisiert angedeutetes Kraftfahrzeug 1 mit einem Antriebsaggregat 2, beispielsweise einer Brennkraftmaschine. Außerdem weist das Kraftfahrzeug 1 eine Einheit 3 zur Nebenstromversorgung, eine sogenannte APU 3 (auxiliary power unit), sowie einige elektrische Verbraucher 4 auf. Bei diesen elektrischen Verbrauchern 4 kann es sich beispielsweise um eine Klimaanlage, um Geräte aus dem Bereich der Unterhaltungselektronik oder dergleichen handeln. Es sind jedoch auch Nebenaggregate des Antriebsaggregats 2, wie beispielsweise eine elektrisch angetriebene Wasserpumpe, eine Lenkhilfspumpe, Elemente der Motorelektronik oder dergleichen als elektrische Verbraucher 4 denkbar.

Diese elektrischen Verbraucher 4 werden von der APU 3 mit elektrischer Energie bzw. elektrischer Leistung Pₑₗ versorgt. Gemäß der gestrichelt angedeuteten Verbindung 5 kann jedoch auch zusätzliche elektrische Energie bzw. Leistung von dem Antriebsaggregat 2, beispielsweise in an sich bekannter Weise von einer Lichtmaschine, welche direkt oder indirekt über eine Kurbelwelle des Antriebsaggregats 2 angetrieben wird, stammen.

Die APU 3 besteht aus einem Gaserzeugungssystem 6, welches aus einem zugeführten sauerstoffhaltigen Gas (O₂), wie z.B. Luft, und einem im allgemeinen flüssig vorliegenden Kohlenwasserstoff, einem Kohlenwasserstoffgemisch oder einem Kohlenwasserstoff-Wasser-Gemisch (Premix) ein wasserstoffhaltiges Gas (H₂) erzeugt und dieses einer Brennstoffzelle 7 zur Verfügung stellt, in welcher sein Energieinhalt zusammen mit dem eines sauerstoffhaltigen Gases (O₂), insbesondere Luft, in elektrische Energie umgewandelt wird. Der für die Erzeugung des wasserstoffhaltigen Gases (H₂) in dem Gaserzeugungssystem 6 vorgesehene Ausgangsstoff wird in dem Gaserzeugungssystem 6 aus einer Ausgangsstoff-Speichereinrichtung 8 zur Verfügung gestellt.

Insbesondere bei der APU 3, welche im allgemeinen eine vergleichsweise geringe elektrische Nennleistung aufweist, bietet es sich an, das Gaserzeugungssystem 6 und die Brennstoffzelle 7 mittels eines Wasser-Methanol-Gemischs, eines sogenannten Premix, als Ausgangsstoff zu betreiben. Aufgrund der Verwendung des Premix als Ausgangsstoff können das Gaserzeugungssystem 6 bzw. einzelne Komponenten in diesem Gaserzeugungssystem 6 entsprechend einfacher aufgebaut werden, da hier keine getrennte Behandlung von Wasser und Methanol erforderlich ist und dies die Leitungslängen und die Komplexität der eingesetzten Komponenten entsprechend reduziert.

Da sich nun in einer solchen APU 3, welche eine vergleichsweise kleine Baueinheit darstellt, die Versorgung des Gaserzeugungssystems 6, insbesondere der Wärmetauscher und des Reformierungsreaktors mit der erforderlichen thermischen Energie ausschließlich aus der durch das Gaserzeugungssystem 6 erzeugten Abwärme vergleichsweise schwierig gestaltet, ist es für den idealen Betrieb von nutzen, wenn über einen zusätzlichen Kraftstoff, welcher in einer Kraftstoff-Speichereinrichtung 9 bevorratet wird, diese zusätzlich erforderliche thermische Energie bereitgestellt werden kann.

Dabei ist es besonders günstig, daß hier die Kraftstoff-Speichereinrichtung 9 getrennt von der Ausgangsstoff-Speichereinrichtung 8 ausgebildet ist. Dadurch ergibt sich nämlich die Möglichkeit, daß als Kraftstoff ein vom Ausgangsstoff verschiedener Kraftstoff eingesetzt werden kann. Dieser ermöglicht einerseits die Verwendung des Premix als Ausgangsstoff und die damit verbundenen Vereinfachungen, andererseits kann der in der Kraftstoff-Speichereinheit 9 bevorratete Kraftstoff einen höheren Heizwert und eine höhere Energiedichte aufweisen als es der Kohlenwasserstoffanteil des in der Ausgangsstoff-Speichereinrichtung 8 bevorrateten Premix tut. Dadurch läßt sich das erforderliche Volumen für die Kraftstoff-Speichereinrichtung 9 sehr klein halten.

Bei einem Einsatz desselben Kraftstoffs als zusätzlicher Kraftstoff für das Gaserzeugungssystem 6 und als Kraftstoff für das Antriebsaggregat 2, beispielsweise die Brennkraftmaschine, kann die Kraftstoff-Speichereinrichtung 9 in sehr einfacher Weise gleichzeitig die Kraftstoff-Speichereinrichtung 9 für das Antriebsaggregat 2 darstellen, was in der einzigen beigefügten Figur durch die optionale Verbindung 10 angedeutet ist. Es ergibt sich dadurch die Möglichkeit eines sehr kompakten Aufbaus der APU 3, welche dann lediglich die Verbindung 10, z.B. ein Leitungselement gegebenenfalls mit einer Fördereinrichtung, zu der ohnehin existierenden Kraftstoff-Speichereinrichtung 9 benötigt.

Alternativ dazu könnte bei einem Einsatz in einem Wohnmobil auch ein Flüssiggasspeicher, welcher üblicherweise für die entsprechenden Anwendungen, wie Kochen oder Heizen vorgesehen ist, als Kraftstoff-Speichereinrichtung 9 dienen, welche dann auch das Gaserzeugungssystem 6 der APU 3 mit dem zusätzlichen Kraftstoff versorgt. Dies ergibt sehr günstige Möglichkeiten bezüglich der Förderung und der Regelung des Kraftstoffvolumenstroms, da sich diese bei Flüssiggas in bekannter Weise besonders einfach realisieren läßt.

Grundlegend gibt es dabei verschiedene Möglichkeiten den Kraftstoff aus der Kraftstoff-Speichereinrichtung 9 in dem Gaserzeugungssystem 6 umzusetzen. Ist als Kraftstoff ein Kohlenwasserstoff eingesetzt, welcher leichter als der in der Ausgangsstoff-Speichereinrichtung 8 gespeicherte Ausgangsstoff siedet, so kann dieser beispielsweise über die Einrichtungen des Gaserzeugungssystems 6, also die Katalysatoren, die Reformer und dergleichen, analog zur Verwendung des Ausgangsstoffes in dem Gaserzeugungssystem 6 umgesetzt werden.

Eine Alternative, welche jedoch auch zusätzlich zu der oben beschriebenen Verwendung vorgesehen sein kann, stellt die Verwendung des zusätzlichen Kraftstoffes zur Erzeugung der thermischen Energie in Form einer herkömmlichen an sich bekannten Verbrennung dar. Für diese herkömmliche Verbrennung läßt sich sowohl ein leicht siedender Kraftstoff als auch ein anderer geeigneter Kraftstoff, wie z.B. Dieselkraftstoff bei der Verwendung der APU 3 in einem Nutzfahrzeug, verwenden. Dieselkraftstoff spielt dabei seine günstigen Eigenschaften bezüglich des hohen Energieinhalts bei relativ geringem Speichervolumen aus.

Neben diesem Einsatz des Verfahrens in einer APU 3 bietet sich selbstverständlich auch der Einsatz in einer entsprechend größer ausgeführten Brennstoffzellenanlage mit einem vergleichbaren Gaserzeugungssystem 6 an. Für einen derartigen Anwendungszweck kann das Verfahren dann insbesondere in einer Startphase des Gaserzeugungssystems 6 zügig sein, da hier das Gaserzeugungssystem 6 sehr schnell aufgeheizt werden kann und die Betriebsbereitschaft sehr schnell erreicht wird. Dies ermöglicht dann geringere Startemissionen des Gesamtsystems.

Ein sehr günstiger Anwendungsfall wäre hierbei ein ausschließlich über wenigstens ein Brennstoffzellensystem betriebenes Wohnmobil, welches mit einem zusätzlichen Flüssiggasspeicher versehen ist, welcher die Energie für Kochen und Heizen zu Verfügung stellt. Dieses Flüssiggas, als zusätzlicher Brennstoff an Bord des Fahrzeuges 1 kann dann in sehr einfacher Weise für die zusätzliche Bereitstellung der thermischen Energie für das Gaserzeugungssystem 6 genutzt werden. Neben einer reinen Nutzung in der Startphase ist hierbei natürlich auch eine Nutzung zum Zuheizen während des Betriebs denkbar, falls es die Betriebsbedingungen des Gaserzeugungssystems 6 erfordern sollten.

## Patentansprüche

1. Verfahren zum Betreiben eines Gaserzeugungssystems in einem Kraftfahrzeug, wobei in dem Gaserzeugungssystem aus einem, insbesondere flüssigen, Ausgangsstoff, welcher zumindest einen Anteil an flüssigem Kohlenwasserstoff als Kraftstoff enthält, ein wasserstoffhaltiges Gas zum Betrieb einer Brennstoffzelle, mit welcher die Bordstromversorgung des Kraftfahrzeuges erfolgt, erzeugt wird,
**dadurch gekennzeichnet, daß**
zur Versorgung des Gaserzeugungssystems (6) mit thermischer Energie zumindest in einzelnen Betriebsphasen des Gaserzeugungssystems (6) ein zusätzlicher Kraftstoff genutzt wird.

2. Verfahren nach Anspruch 1,
**dadurch gekennzeichnet, daß**
die Einheit (3) aus dem Gaserzeugungssystem (6) und der Brennstoffzelle (7) neben einem Antriebsaggregat (2) des Kraftfahrzeuges (1) als Nebenstromversorgung (3) genutzt wird.

3. Verfahren nach Anspruch 1 oder 2,
**dadurch gekennzeichnet, daß**
ein Kraftstoff mit einer höheren Energiedichte als die des Ausgangsstoffs genutzt wird.

4. Verfahren nach Anspruch 1, 2 oder 3,
**dadurch gekennzeichnet, daß**
ein Kraftstoff genutzt wird, welcher leichter siedet als der Ausgangsstoff.

5. Verfahren nach einem der Ansprüche 1 bis 4,
**dadurch gekennzeichnet, daß**
der Kraftstoff in dem Gaserzeugungssystem (6) analog zu dem Ausgangsstoff umgesetzt wird.

6. Verfahren nach einem der Ansprüche 1 bis 5,
**dadurch gekennzeichnet, daß**
der Kraftstoff mittels einer herkömmlichen Verbrennung im Bereich von einzelnen Komponenten des Gaserzeugungssystems (6) umgesetzt wird.

7. Verfahren nach einem der Ansprüche 1 bis 6,
**dadurch gekennzeichnet, daß**
es zum Betrieb der Brennstoffzelle (7) mit dem Gaserzeugungssystem (6) in einem Kraftfahrzeug (1) vorgesehen ist, bei dem eine vom Fahrzustand des Kraftfahrzeugs (1) unabhängige elektrische Energie-Anforderung vorliegt.

8. Verfahren nach einem der Ansprüche 1 bis 7,
**dadurch gekennzeichnet, daß** als Ausgangsstoff ein Gemisch aus Methanol und Wasser genutzt wird.

9. Verfahren nach Anspruch 2
**dadurch gekennzeichnet, daß**
der zum Betrieb des Antriebsaggregates (2) vorhandene Kraftstoff als zusätzlicher Kraftstoff für das Gaserzeugungssystem (6) verwendet wird.
